# EUROPEAN PATENT APPLICATION

(11) **EP 3 045 490 A1**
(43) Date of publication of application: **20.07.2016**
(21) Application number: 15202513.6
(22) Date of filing: 23.12.2015
(51) Int. Cl.: C08J 7/04, C08J 7/06

(54) **WINDOW FOR DISPLAY DEVICE AND DISPLAY DEVICE INCLUDING THE SAME**

(30) Priority: 02.01.2015 KR 20150000230; 23.06.2015 US 201514747061
(71) Applicant: Samsung Electronics Co., Ltd, Gyeonggi-do 16677 (KR); Samsung SDI Co., Ltd., Gyeonggi-do 17084 (KR)
(72) Inventor: SONG, Sun Jin, Seoul (KR); JO, A Ra, Gyeonggi-di (KR); CHOI, Sungwon, Gyeonggi-do (KR); SOHN, Byunghee, Gyeonggi-do (KR)
(74) Representative: Zijlstra, Robert Wiebo Johan

(57) **Abstract**

A window for a display device including a plastic substrate including a poly(imide-amide) copolymer and a hard-coating layer disposed on at least one side of the plastic substrate, wherein the plastic substrate has pencil scratch hardness of greater than or equal to about 3H under a vertical load of about 1 kilogram according to ASTM D3363 and a yellow index (YI) of less than or equal to 3 according to ASTM E313.

## Description

### FIELD OF THE INVENTION

A window for a display device and a display device including the same are disclosed.

### BACKGROUND OF THE INVENTION

A portable display device such as a smart phone or a tablet PC has been an object of active research due to its attractively high performance and popularity. For example, a light-weight flexible (i.e., bendable or foldable) portable display device has been studied and developed for commercializing. The portable display device of a liquid crystal display or the like includes a protective window for protecting a display module such as a liquid crystal layer. Currently, most portable display devices include a window including a rigid glass substrate. However, the glass cannot be applied to a flexible display because it is not flexible and can be easily broken by an extraneous impact. Therefore, attempts have been made to substitute a plastic film for the protective window in the display device.

However, it is very difficult to simultaneously satisfy mechanical properties (e.g. hardness) and optical properties required for a protective window of a display device. Therefore, there remains a need for a protective window for a display device including a plastic film material which would have excellent hardness and optical properties at the same time.

### SUMMARY OF THE INVENTION

An embodiment provides a plastic display device window simultaneously having high hardness and excellent optical properties.

Another embodiment provides a display device including the window for a display device.

In an embodiment, a window for a display device includes:
a plastic substrate including a poly(imide-amide) copolymer and
a hard-coating layer disposed on at least one side of the plastic substrate, wherein the plastic substrate has pencil scratch hardness of greater than or equal to about 3H under a vertical load of about 1 kilogram according to ASTM D3363, and a yellow index (YI) of less than or equal to 3 according to ASTM E313.

The poly(imide-amide) copolymer may include a first repeating unit represented by Chemical Formula 1 and a second repeating unit represented by Chemical Formula 2:

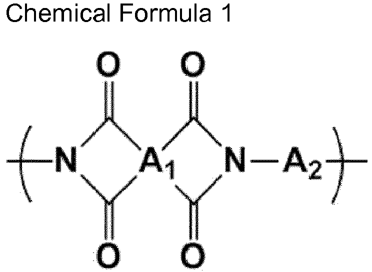

Chemical Formula 2 (̵NH-CO-A₃-CO-NH-A₂)̵

In the Chemical Formulae 1 and 2,
A₁ is a first residual group represented by Chemical Formula 3 and/or a second residual group represented by Chemical Formula 4: 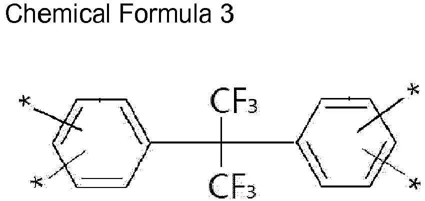 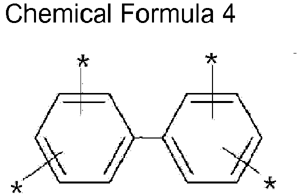 wherein, in Chemical Formulae 3 and 4,
* indicates a point linked to a carbonyl carbon atom of an imide ring, and A₂ is a group represented by chemical formula: 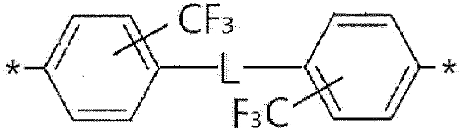
in the chemical formula, L is a single bond, -C(=O)NH-, -Ph-C(=O)NH-Ph-, -NHC(=O)-Ph-C(=O)NH- (wherein Ph is a substituted or unsubstituted phenylene residual group, and is linked to an adjacent residual group at an ortho, meta, or para position, or a combination thereof),
* indicates a point linked to nitrogen atom of an imide ring or of an amide group, and
A₃ is a substituted or unsubstituted divalent phenylene residual group, a substituted or unsubstituted divalent naphthalene residual group, or a residual group where two substituted or unsubstituted aromatic rings are linked through a single bond, -O-, -S-, -C(=O)-, -SO₂-, -Si(CH₃)₂-, -(CR'R")ₚ- (wherein 1≤p≤10, R' and R" are the same or different and are independently hydrogen, a hydroxy group, a C1 to C3 alkyl group, or a C1 to C3 fluoroalkyl group), or (CF₂)_{q} (wherein 1≤q≤10).

A₃ may be a substituted or unsubstituted divalent phenylene residual group.

The plastic substrate may have a thickness of about 25 micrometers to about 100 micrometers.

The plastic substrate may have a tensile modulus of greater than or equal to about 5.5 giga Pascal.

The plastic substrate may have a yellow index increase of less than or equal to about 0.5 at exposure of UVB light for 72 hours.

The hard-coating layer may include an acrylate polymer, polycaprolactone, a urethane-acrylate copolymer, polyrotaxane, an epoxy resin, an organosilicon material, an inorganic hard-coating material, or a combination thereof.

In another embodiment, a display device may include the window.

The window may be disposed on a display module of the display device.

### BRIEF DESCRIPTION OF THE DRAWINGS

The above and other aspects, advantages and features of this disclosure will become more apparent by describing in further detail exemplary embodiments thereof with reference to the accompanying drawings, in which:
FIG. 1 is a schematic view showing a cross-section of a window for a display device according to an embodiment; and
FIG. 2 is a schematic view showing a cross-section of a window for a display device according to another embodiment.

### DETAILED DESCRIPTION OF THE EMBODIMENTS

Hereinafter, embodiments of the present disclosure are described in detail. However, these embodiments are exemplary, and this disclosure is not limited thereto.

Accordingly, the embodiments are merely described below, by referring to the figures, to explain aspects of the present description. As used herein, the term "and/or" includes any and all combinations of one or more of the associated listed items. The term "or" means "and/or." Expressions such as "at least one of" when preceding a list of elements, modify the entire list of elements and do not modify the individual elements of the list.

It will be understood that when an element is referred to as being "on" another element, it may be directly on the other element or intervening elements may be present therebetween. In contrast, when an element is referred to as being "directly on" another element, there are no intervening elements present.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." As used herein, the term "and/or" includes any and all combinations of one or more of the associated listed items. Expressions such as "at least one of," when preceding a list of elements, modify the entire list of elements and do not modify the individual elements of the list.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system).

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

"Mixture" as used herein is inclusive of all types of combinations, including blends, alloys, solutions, and the like.

As used herein, the term "alkyl group" may refer to a group derived from a straight or branched chain saturated aliphatic hydrocarbon having the specified number of carbon atoms and having a valence of one.

As used herein, the term "fluoroalkyl group" may refer to an alkyl group as defined above in which one or more hydrogen atoms are substituted with fluorine atoms.

As used herein, when specific definition is not otherwise provided, the term "substituted" refers to one substituted with at least one substituent selected from a halogen (-F, -Cl, -Br, or -I), a hydroxy group, a nitro group, a cyano group, an amino group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group, instead of at least one hydrogen of the given functional group, and the substituents may be linked to each other to provide a ring.

As used herein, when specific definition is not otherwise provided, the term "alkyl group" refers to a C1 to C30 alkyl group, and the term "aryl group" refers to a C6 to C30 aryl group.

As used herein, the term "hetero cyclic group" refers to a group including 1 to 3 heteroatoms selected from O, S, N, P, and Si, and a combination thereof in one ring, and may be, for example, pyridine, thiophene, pyrazine, and the like, but is not limited thereto.

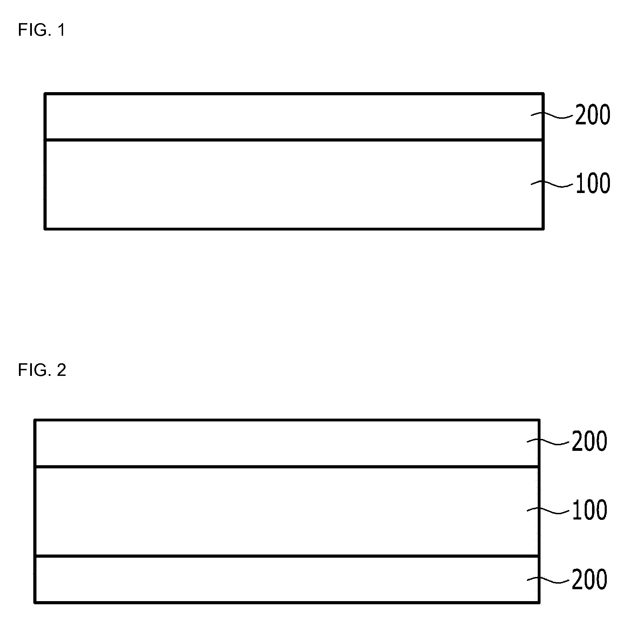

In an embodiment, a window for a display device includes a plastic substrate 100 including a poly(imide-amide) copolymer and a hard-coating layer 200 provided on at least one side (e.g., one side only or both sides) of the plastic substrate 100 (FIGS. 1 and 2). The plastic substrate has pencil scratch hardness of greater than or equal to about 3H under a vertical load of about 1 kg according to ASTM D3363, and a yellow index (YI) of less than or equal to 3 according to ASTM E313.

Surface (pencil) hardness and yellow index are used as references for determining whether the window has high hardness and excellent optical properties. As the primary mechanical property of the plastic substrate included in the window, the elongation property such as Young's modulus has been mainly considered. However, even if the plastic substrate usable for a window for a display device has a high modulus, the hardness is frequently not increased linearly when a hard-coating layer is applied. Accordingly, for the plastic substrate having a higher than the predetermined level of tensile modulus (e.g., greater than or equal to about 5 GPa), the surface hardness may be more important than the modulus.

For example, when the surface pencil hardness of plastic substrate is less than or equal to about 2H, it is difficult for the display window to have sufficiently high (e.g., greater than or equal to about 9H) pencil hardness even after the hard coating layer is applied. When a thickness of the plastic substrate or a thickness of the hard-coating layer is increased, the pencil hardness of the window may be increased. However, for the bending characteristics and the folding characteristics of a display module, it is desired that the window has low thickness. In other words, thick films are unfavorable for use in a window. It is confirmed that when a 50 µm-thick plastic substrate has surface pencil hardness of less than or equal to about 2H, the final window may not accomplish the surface pencil hardness of about 9H even if the hard coating has a thickness of 50 µm, although the thickness may differ depending upon the type of hard coating. Furthermore, when an adhesive layer is included under the plastic substrate or even when an OLED module or the like is included, the hardness maybe not approach the desirable level (e.g., 8H).

On the other hand, the plastic substrate may accomplish a transparent display like a glass substrate when having a low yellow index for use as a window. However, the yellow color of a substrate having a yellow index of greater than 3 may be noticed by the naked eye.

Accordingly, in the window for a display device according to an embodiment, a plastic substrate having a thickness of less than or equal to about 100 µm has a film surface pencil hardness of greater than or equal to about 3H according to ASTM D3363, and simultaneously has a film yellow index (YI) of less than or equal to about 3 according to ASTM E313. When the plastic substrate has the above physical properties, the final window may have strong scratch resistance and good transparency.

A poly(imide-amide) copolymer may include a first repeating unit represented by Chemical Formula 1 and a second repeating unit represented by Chemical Formula 2.

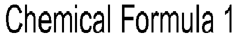

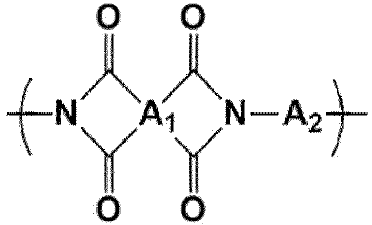

Chemical Formula 2 (̵NH-CO-A₃-CO-NH-A₂)̵

In the above Chemical Formulae 1 and 2,
A₁ is a first residual group represented by Chemical Formula 3 and/or a second residual group represented by Chemical Formula 4.

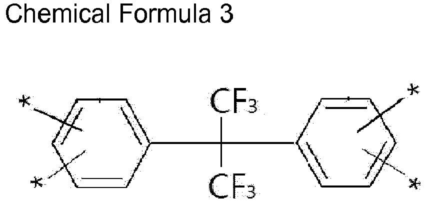

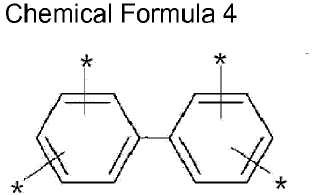

In Chemical Formulae 3 and 4,
* indicates a point linked to a carbonyl carbon atom of an imide ring, and A₂ is a group represented by Chemical Formula 5.

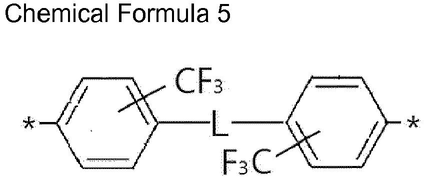

In Chemical Formula 5,
L is a single bond, -C(=O)NH-, -Ph-C(=O)NH-Ph-, -NHC(=O)-Ph-C(=O)NH- (wherein Ph is a substituted or unsubstituted phenylene (C₆H₄) residual group, and is linked to an adjacent residual group at an ortho, meta, or para position, or a combination thereof),
* indicates a point linked to nitrogen atom of an imide ring or of an amide group, and
A₃ is a substituted or unsubstituted divalent phenylene (C₆H₄) residual group, a substituted or unsubstituted divalent naphthalene residual group, or a residual group where two substituted or unsubstituted aromatic rings are linked through a single bond, -O-, -S-, -C(=O)-, -SO₂-, -Si(CH₃)₂-, -(CR'R")ₚ- (wherein 1≤p≤10, R' and R" are the same or different and are independently hydrogen, a hydroxy group, a C1 to C3 alkyl group, or a C1 to C3 fluoroalkyl group), or (CF₂)_{q} (wherein, 1≤q≤10). In an embodiment, A₃ may be a substituted or unsubstituted divalent phenylene (C₆H₄) residual group.

In the poly(imide-amide) copolymer, the amount of the second repeating unit per mole of the first repeating unit is not particularly limited, and may be selected as desired considering the following properties. For example, in the poly(imide-amide) copolymer, the amount of the second repeating unit (amide repeating unit) per mole of the first repeating unit (imide repeating unit) may range from about 0.3 to about 2 moles (mol), for example, about 0.4 to about 2 mol, but is not limited thereto. In the poly(imide-amide) copolymer, when the amount of the first residual group of the first repeating unit is increased, the light characteristics may be improved, but the mechanical properties may be deteriorated. When the amount of the second residual group of the first repeating unit is increased, the mechanical properties may be improved and simultaneously the resistance to UV may be improved, but the optical properties may be deteriorated. For example, when the amount of the second residual group is greater than or equal to about 20 mol based on a total of 100 mol of the imide repeating unit (first repeating unit) and the amide repeating unit (second repeating unit), the plastic substrate may have a tensile modulus of greater than or equal to about 5 giga Pascals (GPa), and the yellow index increase thereof may be less than or equal to about 0.5 when exposed to UVB light for 72 hours. The increase of the second repeating unit represented by Chemical Formula 2 may increase pencil hardness. For example, when the amount of the second repeating unit is greater than or equal to about 30 mol based on the total of 100 mol of the imide repeating unit (first repeating unit) and the amide repeating unit (second repeating unit), the pencil hardness may be greater than or equal to about 3H. In an embodiment, the poly(imide-amide) may be a copolymer including a repeating unit A represented by Chemical Formula 1-1, a repeating unit B represented by Chemical Formula 1-2, and a repeating unit C represented by Chemical Formula 2-1.

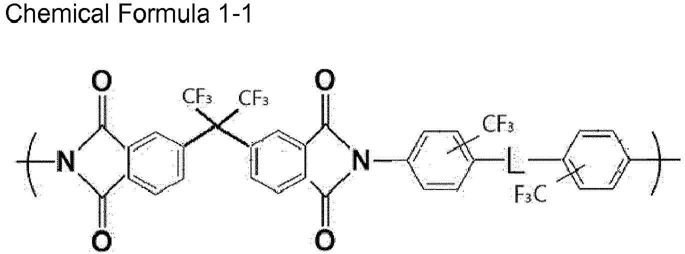

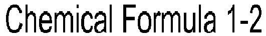

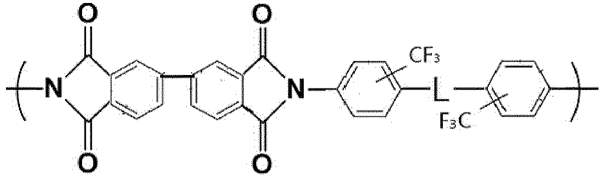

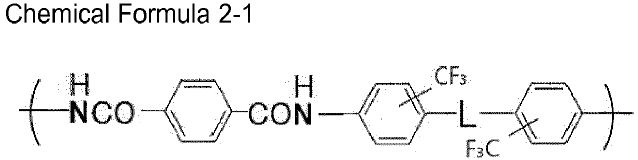

In the above chemical formulae, L is the same as defined above.

The molar ratio between the sum of the repeating unit A and the repeating unit B, and the repeating unit C, is not particularly limited, but may be selected as desired. For example, the molar ratio between the sum of the repeating unit A and the repeating unit B, and the repeating unit C, may range from about 0.3 to about 2 mol, for example from about 0.4 to about 2 mol of the repeating unit C, based on 1 mol of the sum of the repeating unit A and the repeating unit B, but is not limited thereto.

The molar ratio between the repeating unit A and the repeating unit B is also not particularly limited, and may be selected as desired. For example, the amount of the repeating unit B may range from about 0.2 to about 4 mol, for example from about 0.4 to about 3 mol, per 1 mole of the repeating unit A, but is not limited thereto.

The plastic substrate may have a thickness of less than or equal to about 100 µm, for example, about 25 µm to about 100 µm. When the plastic substrate has the ranged thickness, it may have the yellow index and the surface hardness mentioned above.

The plastic substrate may have a tensile modulus of greater than or equal to about 5.5 GPa.

The plastic substrate may be obtained by making a film having a desirable thickness using a poly(imide-aramid) copolymer. The poly(imide-aramid) copolymer may be prepared by condensation polymerization of a diamine compound represented by Chemical Formula 6, a first acid dianhydride represented by Chemical Formula 7, a second acid dianhydride represented by Chemical Formula 8, and a reactive carbonyl compound of Chemical Formula 9 in an organic solvent.

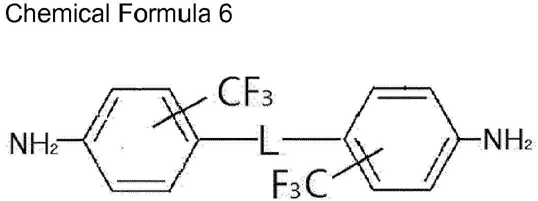

In the chemical formula, L is the same a defined above.

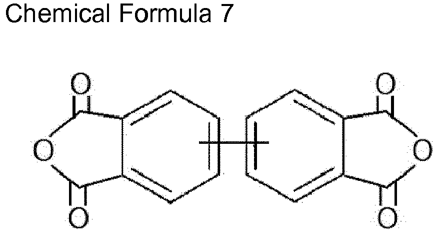

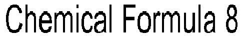

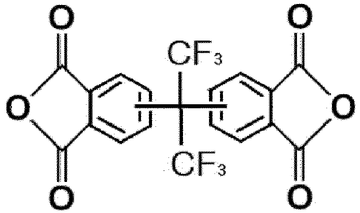

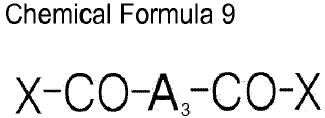

In the above chemical formula,
A₃ is a substituted or unsubstituted divalent phenylene (C₆H₄) residual group, a substituted or unsubstituted divalent naphthalene residual group, or a residual group where two substituted or unsubstituted aromatic rings are linked through a single bond, -O-, -S-, -C(=O)-, -SO₂-, -Si(CH₃)₂-, -(CR'R")ₚ- (wherein 1≤p≤10, R' and R" are independently hydrogen, a hydroxy group, a C1 to C3 alkyl group, or a C1 to C3 fluoroalkyl group), or -(CF₂)_{q}- (wherein 1≤q≤10), and X is Cl, OH, or OCH₃.

The diamine compound of Chemical Formula 6, the first acid dianhydride of Chemical Formula 7, the second acid dianhydride of Chemical Formula 8, and the reactive carbonyl compound of Chemical Formula 9 may be polymerized by condensation under known conditions (e.g., a temperature and a time) to prepare a polyamic acid and a polyamide. For example, the diamine compound of Chemical Formula 6 may be 2,2'-bis(trifluoromethyl)benzidine (TFDB). The first acid dianhydride of Chemical Formula 7 may be biphenyltetracarboxylic anhydride (BPDA). The second acid dianhydride of Chemical Formula 8 may be 4,4'-(hexafluoroisopropylidene) diphthalic anhydride (6FDA). The reactive carbonyl compound of Chemical Formula 9 may be terephthalic acid, dimethyl terephthalate, terephthaloyl chloride (TPCL), biphenyl dicarbonyl chloride, 2,6-naphthalene dicarboxylic dichloride, 1,5-naphthalene dicarboxylic dichloride, or a combination thereof. The solvent may be a known polymerization solvent which is suitable for preparation of a polyamic acid and a polyamide.

In an embodiment, the diamine compound of Chemical Formula 6 is dissolved in a polymerization solvent to prepare a diamine solution, the carbonyl compound of Chemical Formula 9 is added to the diamine solution to polymerize a polyamide component, a mixture of the first acid dianhydride of Chemical Formula 7 and the second acid dianhydride of Chemical Formula 8 is added to the diamine solution including the polyamide to prepare a copolymer including a polyamic acid component, and the copolymer is imidized to obtain a poly(imide-amide) copolymer.

The total amount of the acid dianhydride compound and the carbonyl compound represented by Chemical Formula 9 with respect to the diamine compound {(acid dianhydride + carbonyl compound)/diamine} may range from about 0.95 to about 1.1, for example, from about 0.99 to about 1.05, in a molar ratio.

The amount of the reactive carbonyl compound may range from about 0.3 to about 2 mol, for example, about 0.4 to about 2, mol per mol of a sum of the first and second acid dianhydrides, but is not limited thereto. In addition, per 1 mol of the first acid dianhydride, the amount of the second acid dianhydride may range from about 0.2 to about 4 mol, for example from about 0.4 to about 3 mol, but is not limited thereto.

The polycondensation may be performed with agitation under an air atmosphere or an inert gas atmosphere at a predetermined temperature (e.g., less than or equal to about 50 °C, less than or equal to about 35 °C, or less than or equal to about 30 °C). The condition and the general mechanism of the polycondensation for preparing polyamide or polyamic acid are known. The polymerization is not particularly limited and may be selected as desired.

For example, the polycondensation may be performed in a solution including a polycondensation catalyst, if needed. In the case of solution polymerization, the polymerization solvent may include any solvents known for preparing a polyamide and a polyamic acid. Examples of the solvent may be a dipolar aprotic solvent such as N-methyl pyrrolidone, dimethyl acetamide, dimethyl formamide, dimethyl sulfoxide, or tetrahydrofuran, gamma butyrolactone, monochlorobenzene, cyclohexane, acetonitrile, and the like, but are not limited thereto.

The concentration of each monomer compound in the solution may be selected as desired, and is not particularly limited. As described above, the compound represented by Chemical Formula 9, the acid dianhydride monomer, and the diamine monomer may be easily prepared according to a known synthesis method or may be commercially available.

The obtained poly(amic acid-amide) is imidized to provide a poly(imide-amide) copolymer. Before or after the imidization, it may undergo drying at a predetermined temperature to remove the solvent. In an embodiment, the imidization may be performed by chemical imidization. In an embodiment, the imidization may be performed by thermal imidization. In another embodiment, the imidization may be performed by thermal imidization and chemical imidization.

The specific conditions of chemical imidization are known. For example, the chemical imidization may include treating poly(amic acid-amide) copolymer with an agent such as aliphatic carboxylic acid dianhydride and a tertiary amine, for example, at an ambient temperature. The widely used agent may include acetic anhydride, pyridine, triethylamine, or the like. In this case, the degree of imidization may be changed depending upon the solubility of the polyimide in the imidization mixture. The chemical imidization product may be obtained by providing the obtained composition as it is; or recovering a polymer and dissolving the same in an appropriate solvent (e.g., including N-methyl pyrrolidone, dimethyl acetamide, gamma butyrolactone, monochlorobenzene, or the like) again, and then may be provided to fabricate a film.

The specific conditions of thermal imidization are disclosed. The thermal imidization may be performed by heating the copolymer at a predetermined temperature (e.g., greater than or equal to about 200 °C, or from about 200 °C to about 400 °C).

In order to use the chemical imidization in combination with the thermal imidization, the poly(amic acid-amide) copolymer is chemically imidized, and the obtained partially imidized product is heated to provide a poly(imide-amide) copolymer having a desired imidization degree.

Fabricating a film from the poly(imide-amide) copolymer is similar to the process of manufacturing a film from a polyimide, and is not particularly limited. For example, the film may be obtained by preparing a solution including a final polymer or a precursor thereof (e.g., a poly(amic acid-amide) copolymer or a partially imidized poly(amic acid-amide)), casting the solution on a support, and heating the same, if needed (e.g., for imidization and/or drying).

The window for a display device includes a hard-coating layer disposed on one side or both sides of the plastic substrate. The hard-coating layer may have a single-layer structure or a multi-layer structure of two or more layers. The hard-coating layer increases surface hardness of the window. When a glass plate is used as a test plate, the hard-coating layer is measured with a vertical load of 1 kg according to ASTM D3363, and the hard coating layer may have hardness of greater than or equal to about 1H, for example, greater than or equal to about 8H. When the window includes such a hard-coating layer, a window for a display device according to an embodiment may have hardness of greater than or equal to about 7H, for example greater than or equal to about 9H. Materials for forming a hard-coating layer (that is, a hard-coating material) may be thermally curable or photocurable materials. Examples of the material may be an acrylate polymer, polycaprolactone, a urethane-acrylate copolymer, polyrotaxane, an epoxy polymer, an organosilicon material such as silsesquioxane, and an inorganic hard-coating material such as silica, but are not limited thereto. The acrylate polymer may be a polymer of a monomer mixture including multi-functional acrylate monomers. Examples of the multi-functional acrylate monomer may be trimethylolpropane triacrylate (TMPTA), trimethylolpropane ethoxy triacrylate (TMPEOTA), glycerine propoxylated triacrylate (GPTA), pentaerythritol tetraacrylate (PETA), and dipentaerythritol hexaacrylate (DPHA), but are not limited thereto. The urethane acrylate material and the multi-functional acrylate material have excellent adherence and high productivity.

The window for a display device according to an embodiment has excellent mechanical properties such as high rigidity and tensile strength, and simultaneously has good optical properties such as a low yellow index. Particularly, when a glass substrate is not used, the window is light in weight and has high flexibility, so it is usable in a flexible display.

In another embodiment, a display device including the window is provided.

The window may be disposed on a display module of the display device. The display module may be a liquid crystal display module, an organic light emitting display module, a plasma display module, an electric field effect display module, an electrophoretic display module, and the like, but is not limited thereto.

Hereafter, this disclosure is described in detail with reference to examples. The following examples and comparative examples are not restrictive, but are illustrative.

### Examples

### Example 1

84,000 grams of dimethyl acetamide is introduced into a reactor under a nitrogen atmosphere and mixed with 15.614 mol of pyridine. 15.614 mol of 2,2'-bis(trifluoromethyl)-4,4'-biphenyldiamine (TFDB) is added into the reactor and the reaction mixture is stirred until the solid is dissolved to provide a TFDB solution. 7.807 mol of terephthaloyl chloride (TPCL) is added into the TFDB solution and the reaction mixture is agitated at 30 °C for 120 minutes to provide a TFDB solution including polyamide. 2.3421 mol of 4,4'-(hexafluoroisopropylidene) diphthalic anhydride (6FDA) and 5.4649 mol of 3,3',4,4'-biphenyltetracarboxylic dianhydride (BPDA) are added into the TFDB solution including polyamide, and the reaction is allowed to proceed at 30 °C for 36 hours to provide a poly(amic acid-amide) copolymer.

11.7105 mol of acetic anhydride is added into the obtained poly(amic acid-amide) solution as a chemical imidization catalyst and the resulting mixture is agitated for 30 minutes. Subsequently, the same number of moles of pyridine is added thereto and the mixture is further agitated at 30 °C for 36 hours. Having performed the chemical imidization, the solution is purified as a powder through a precipitation process. The powder is vacuum-dried at 120 °C for 24 hours and dissolved in dimethyl acetamide again to provide a poly(imide-amide) copolymer solution.

The obtained solution is coated on a glass plate by a doctor blade method to provide a film. The obtained film is prebaked on a hot plate at 80 °C for 1 hour and heated in a furnace to 250 °C at a rate of 3 degrees Centigrade per minute (°C/min) to undergo film drying and thermal imidization to provide a final film having a thickness of 50 µm.

### Example 2

A film including a poly(imide-amide) copolymer is obtained in accordance with the same procedure as in Example 1, except that TFDB, TPCL, 6FDA, and BPDA are used in the mole ratio shown in Table 1.

### Example 3

A film including a poly(imide-amide) copolymer is obtained in accordance with the same procedure as in Example 1, except that TFDB, TPCL, 6FDA, and BPDA are used in the mole ratio shown in Table 1, and except that the film has a thickness of 40 µm.

### Example 4

A film including a poly(imide-amide) copolymer is obtained in accordance with the same procedure as in Example 1, except that TFDB, TPCL, 6FDA, and BPDA are used in the mole ratio shown in Table 1.

### Example 5

A film including a poly(imide-amide) copolymer is obtained in accordance with the same procedure as in Example 1, except that TFDB, TPCL, 6FDA, and BPDA are used in the mole ratio shown in Table 1.

### Example 6

A film including a poly(imide-amide) copolymer is obtained in accordance with the same procedure as in Example 1, except that BPCL (4,4'-biphenyldicarbonyl chloride) is used instead of TPCL, and TFDB, BPCL, 6FDA, and BPDA are used in the mole ratio shown in Table 1.

### Comparative Example 1

A film including a poly(imide-amide) copolymer is obtained in accordance with the same procedure as in Example 1, except that TFDB, TPCL, 6FDA, and BPDA are used in the mole ratio shown in Table 1, and except that the film has a thickness of 100 µm.

### Comparative Example 2

70,132 grams of dimethyl acetamide is introduced into a reactor under a nitrogen atmosphere and mixed with 23.421 mol of 2,2'-bis(trifluoromethyl)-4,4'-biphenyldiamine (TFDB) and the reaction mixture is stirred until the solid is dissolved to provide a TFDB solution. 21.0789 mol of 4,4' hexafluoroisopropylidene diphthalic anhydride (6FDA) and 2.3421 mol of 3,3',4,4'-biphenyltetracarboxylic dianhydride (BPDA) are added into the TFDB solution and the reaction is allowed to proceed at 30 °C for 36 hours to provide poly(amic acid).

70.263 mol of acetic anhydride is added into the obtained poly(amic acid) solution and the reaction mixture is agitated for 30 minutes. Subsequently, the same number of pyridine is added thereto and the mixture is further agitated at 30 °C for 36 hours to provide a polyimide solution. The obtained solution is coated on a glass plate by a doctor blade method to provide a film, and the obtained film is prebaked on a hot plate at 80 °C for 1 hour and heated in a furnace to 250 °C at a rate of 3 °C/minute to undergo drying and a thermal imidization to provide a final film.

### Evaluating Mechanical Properties of the Obtained Film

The films obtained from Example 1 to Example 6 and Comparative Example 1 and Comparative Example 2 are measured for thickness, pencil hardness, yellow index, a yellow index difference after UV irradiation for 72 hours, and tensile modulus, the results are shown in Table 1.

### [1] Thickness

The thickness is measured using a micrometer (manufactured by Mitutoyo).

### [2] Pencil Hardness

Pencil scratch hardness is measured using a pencil hardness measurer and a Mitsubishi pencil according to the ASTM D3363 standard. Specifically, a film is held on a glass plate having a thickness of 2 mm and measured 5 times in each 10 mm with a vertical load of 1 kg at a pencil speed of 60 millimeters per minute (mm/min), and then the highest hardness when the film is not scratched is determined.

### [3] Yellow Index (YI)

Yellow index is measured using a UV spectrophotometer (Spectrophotometer, Konica Minolta, cm-3600d) according to the ASTM E313 standard.

### [4] Yellow Index Difference (ΔYI)

Yellow index difference (before UV irradiation-after UV irradiation) is measured by exposing to an ultraviolet (UV) lamp having a UVB wavelength region for 72 hours and at greater than or equal to 200 milli Joules per square centimeter (mJ/cm²).

### [5] Tensile Modulus

With an Instron 3365 device, a film sample having a width of 10 mm and a length of 50 mm is drawn at a speed of 0.5 mm/mm/min at room temperature, and each sample is measured 5 times according to an ASTM D882 method and averaged.

**Table 1**

| | TFDB | TPCL | BPCL | BPDA | 6FDA | Thickness (µm) | Pencil hardness | YI | ΔYI | Tensile Modulus (GPa) |
|---|---|---|---|---|---|---|---|---|---|---|
| Example 1 | 100 | 50 | 0 | 35 | 15 | 50 | 4H | 2.3 | 0.5 | 6.1 |
| Example 2 | 100 | 32 | 0 | 50 | 18 | 50 | 3H | 3 | 0.4 | 6 |
| Example 3 | 100 | 48 | 0 | 30 | 22 | 40 | 3H | 2 | 0.5 | 6.3 |
| Example 4 | 100 | 40 | 0 | 20 | 40 | 50 | 3H | 2 | 0.4 | 6.5 |
| Example 5 | 100 | 60 | 0 | 20 | 20 | 50 | 3H | 1.6 | 0.5 | 6.2 |
| Example 6 | 100 | 0 | 50 | 25 | 25 | 50 | 3H | 1.6 | 0.4 | 6.0 |
| Comp. Example 1 | 100 | 45 | 0 | 45 | 10 | 100 | 4H | 6.6 | 0.4 | 6.4 |
| Comp. Example 2 | 100 | 0 | 0 | 10 | 90 | 50 | H | 1.6 | 2.6 | 4.3 |

The data in Table 1 confirm that the films according to Example 1 to Example 6 satisfy the pencil hardness of greater than or equal to 3H and YI of less than or equal to 3.0 at a thickness of less than or equal to 50 µm. The yellow indices of the films obtained in Comparative Example 1 are too high to be used as a plastic substrate in the window for a display screen. The pencil hardness of the film obtained in Comparative Example 2 is too low, so it may not ensure desirable surface hardness (scratch resistance) even when a hard coating layer is included. When the heat treatment condition is enforced, YI may be somewhat increased, and the YI may be further lowered when the heat treatment is performed at a low temperature, but an amount of the remaining solvent may be increased.

While this disclosure has been described in connection with what is presently considered to be practical exemplary embodiments, it is to be understood that the present inventive concept is not limited to the disclosed embodiments, but, on the contrary, is intended to cover various modifications and equivalent arrangements included within the scope of the appended claims.

## Claims

1. A window for a display device comprising:
a plastic substrate comprising a poly(imide-amide) copolymer and
a hard-coating layer disposed on at least one side of the plastic substrate,
wherein the plastic substrate has pencil scratch hardness of greater than or equal to about 3H under a vertical load of about 1 kilogram according to ASTM D3363, and a yellow index (YI) of less than or equal to 3 according to ASTM E313.

2. The window for a display device of claim 1, wherein the poly(imide-amide) copolymer comprises a first repeating unit represented by Chemical Formula 1 and a second repeating unit represented by Chemical Formula 2: 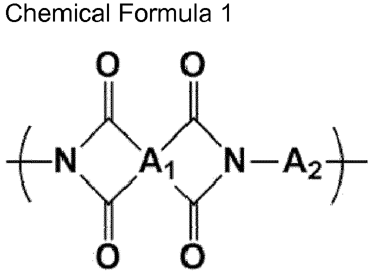 Chemical Formula 2 (̵NH-CO-A₃-CO-NH-A₂)̵ wherein in the Chemical Formulae 1 and 2, A₁ is a first residual group represented by Chemical Formula 3 and/or a second residual group represented by Chemical Formula 4: 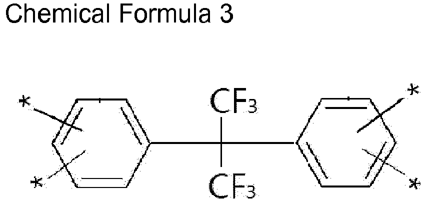 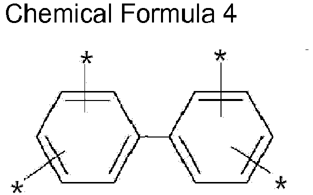 in Chemical Formulae 3 and 4,
* indicates a point linked to carbonyl carbon atom of an imide ring, and
A₂ is a group represented by chemical formula: 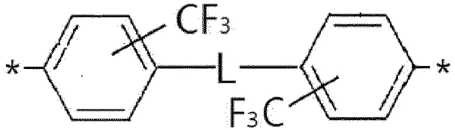 wherein in the chemical formula,
L is a single bond, -C(=O)NH-, -Ph-C(=O)NH-Ph-, -or -NHC(=O)-Ph-C(=O)NH- wherein Ph is a substituted or unsubstituted phenylene residual group, and is linked to an adjacent residual group at an ortho, meta, or para position, or a combination thereof,
* indicates a point linked to nitrogen atom of an imide ring or of an amide group, and
A₃ is a substituted or unsubstituted divalent phenylene residual group, a substituted or unsubstituted divalent naphthalene residual group, or a residual group where two substituted or unsubstituted aromatic rings are linked through a single bond, -O-, -S-, -C(=O)-, -SO₂-, -Si(CH₃)₂-, -(CR'R")ₚ- wherein 1≤p≤10, R' and R" are the same or different and are independently hydrogen, a hydroxy group, a C1 to C3 alkyl group, or a C1 to C3 fluoroalkyl group, or (CF₂)_{q} wherein 1≤q≤10.

3. The window for a display device of claim 2, wherein A₃ is a substituted or unsubstituted divalent phenylene residual group.

4. The window for a display device of claim 2 or 3, wherein in the poly(imide-amide) copolymer the amount of the second repeating unit represented by Chemical Formula 2 per mole of the first repeating unit represented by Chemical Formula 1 ranges from 0.3 to 2 moles.

5. The window for a display device of claim 1, wherein the poly(imide-amide) is a copolymer including a repeating unit A represented by Chemical Formula 1-1, a repeating unit B represented by Chemical Formula 1-2, and a repeating unit C represented by Chemical Formula 2-1. 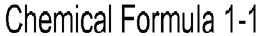 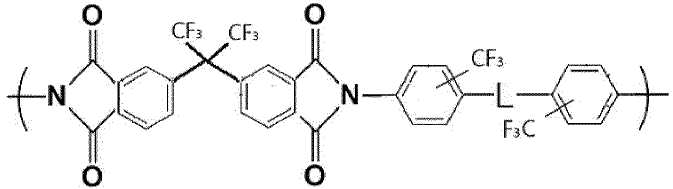 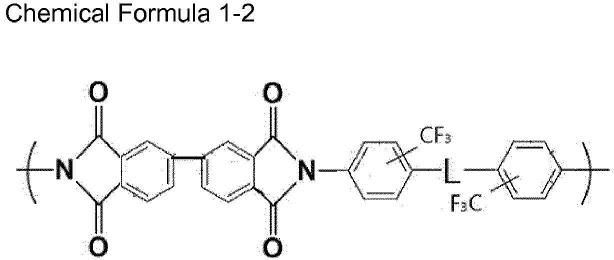 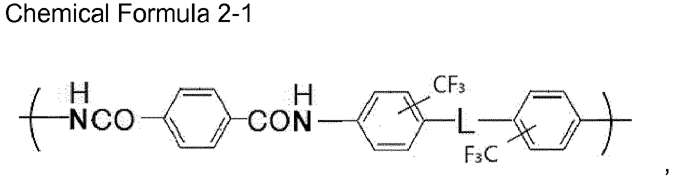 wherein in the chemical formula,
L is a single bond, -C(=O)NH-, -Ph-C(=O)NH-Ph-, -or NHC(=O)-Ph-C(=O)NH- wherein Ph is a substituted or unsubstituted phenylene residual group, and is linked to an adjacent residual group at an ortho, meta, or para position, or a combination thereof.

6. The window for a display device of claim 5, wherein the amount of the repeating unit C ranges from 0.3 to 2 mol based on 1 mol of the sum of the repeating unit A and the repeating unit B; and/or
the amount of the repeating unit B ranges from 0.2 to 4 mol per 1 mole of the repeating unit A.

7. The window for a display device of any of claims 1-6, wherein the plastic substrate has a thickness of 25 micrometers to 100 micrometers.

8. The window for a display device of any of claims 1-7, wherein the plastic substrate has a tensile modulus of greater than or equal to 5.5 giga Pascals.

9. The window for a display device of any of claims 1-8, wherein the plastic substrate has a yellow index increase of less than or equal to 0.5 at exposure of UVB light for 72 hours.

10. The window for a display device of any of claims 1-9, wherein the hard-coating layer comprises an acrylate polymer, polycaprolactone, a urethane-acrylate copolymer, polyrotaxane, an epoxy polymer, an organosilicon material, an inorganic hard-coating material, or a combination thereof.

11. The window for a display device of claim 10, wherein the acrylate polymer is a polymer of a monomer mixture including multi-functional acrylate monomers selected from trimethylolpropane triacrylate (TMPTA), trimethylolpropane ethoxy triacrylate (TMPEOTA), glycerine propoxylated triacrylate (GPTA), pentaerythritol tetraacrylate (PETA), and dipentaerythritol hexaacrylate (DPHA).

12. A display device comprising the window of any of claims 1-11.

13. The display device of claim 12, comprising a display module selected from a liquid crystal display module, an organic light emitting display module, a plasma display module, an electric field effect display module and an electrophoretic display module.

14. The display device of claim 12 or 13, wherein the display device is a portable display device such as a smart phone or a tablet PC.
